# EUROPEAN PATENT APPLICATION

(11) **EP 4 746 168 A1**
(43) Date of publication of application: **20.05.2026**
(21) Application number: 25830922.8
(22) Date of filing: 29.05.2025
(51) Int. Cl.: H01M 50/367, H01M 50/289, H01M 10/6556, H01M 10/613, H01M 10/6551, H01M 50/317

(54) **BATTERY PACK AND VEHICLE INCLUDING SAME**

(30) Priority: 19.06.2024 KR 20240079908
(71) Applicant: LG Energy Solution, Ltd., Seoul 07335 (KR)
(72) Inventor: CHANG, Hyuk-Kyun, Daejeon 34122 (KR); KIM, Soo-Youl, Daejeon 34122 (KR)
(74) Representative: Plasseraud IP
(86) International application number: PCT/KR2025/007327
(87) International publication number: WO 2025/263864

(57) **Abstract**

The present disclosure relates to a battery pack including: a plurality of battery cells; and a pack case configured to store the plurality of battery cells, and having a first venting channel and a second venting channel formed on both sides of the plurality of battery cells to allow venting gas generated from the battery cell to flow thereinto.

## Description

### TECHNICAL FIELD

The present disclosure relates to a battery pack and, more specifically, to a battery pack with enhanced safety and a vehicle including the same.

This application is based on and claims priority from Korean Patent Application No. 10-2024-0079908, filed on June 19, 2024, with the Korean Intellectual Property Office, the disclosure of which is incorporated herein in its entirety by reference.

### BACKGROUND ART

Secondary batteries, which offer high applicability across product categories and possess electrical characteristics such as high energy density and the like, are widely applied not only to portable devices but also to electric vehicles (EVs) or hybrid electric vehicles (HEVs) that are driven by electric power sources. Such secondary batteries are gaining attention as a new energy source for enhancing environmental sustainability and energy efficiency not only due to their primary advantage of significantly reducing the use of fossil fuels, but also because they generate no by-products from energy usage.

Secondary batteries that are currently widely used include lithium-ion batteries, lithium polymer batteries, nickel-cadmium batteries, nickel-metal hydride batteries, and nickel-zinc batteries. When high output voltage is required, multiple battery cells may be connected in series to form a battery module or battery pack. In addition, to increase charge/discharge capacity, multiple battery cells may be connected in parallel to configure a battery module or battery pack.

A common method for configuring a battery pack by connecting multiple battery cells in series/parallel is performed by preferentially configuring a battery module including one or more battery cells and then by adding other components to one or more battery modules to configure a battery pack or battery rack. Recently, cell-to-pack-type battery packs in which multiple battery cells are directly stored in a pack housing or the like, instead of modularizing the same, have been manufactured.

However, in the case where the battery pack includes multiple battery modules therein, as described above, it may be vulnerable to a thermal chain reaction between the battery modules. For example, if an event such as thermal runaway occurs inside any battery module, the thermal runaway may propagate to other battery modules. If the propagation of thermal runaway between the battery modules is not properly suppressed, an event occurring in a specific battery module may cause a thermal chain reaction in other battery modules, leading to explosion or fire, which poses a significant safety risk.

In particular, if an event such as thermal runaway occurs in any battery module, venting gas or the like may be discharged to the outside of the battery module. In this case, heat may be transferred to other battery modules by the discharged venting gas or the like, causing a thermal chain reaction in other battery modules.

Therefore, it is necessary to develop a structure capable of minimizing, when an event such as thermal runaway occurs in a battery pack, the thermal energy transferred to adjacent battery modules, thereby preventing or suppressing thermal runaway propagation between battery cells and/or battery modules.

### DISCLOSURE

### Technical Problem

The present disclosure is designed to solve the problems of the related art, and therefore the present disclosure is directed to providing a battery pack capable of minimizing, when thermal runaway occurs in a battery module, the thermal energy transferred to adjacent battery cells and/or battery modules, thereby preventing or suppressing thermal runaway propagation between battery modules.

However, the technical problems that the present disclosure seeks to solve are not limited to the above-mentioned problems, and other problems not mentioned above will be clearly understood by those skilled in the art from the description of the invention described below.

### Technical Solution

In one aspect of the present disclosure, there is provided a battery pack including: a plurality of battery cells; and a pack case configured to store the plurality of battery cells, and having a first venting channel and a second venting channel formed on both sides of the plurality of battery cells to allow venting gas generated from the battery cell to flow thereinto.

The first venting channel may be provided at a bottom of the plurality of battery cells, and the second venting channel may be provided at a top of the plurality of battery cells.

The multiple first venting channels and the multiple second venting channels may form a group, respectively, and a plurality of groups of the first venting channels and a plurality of groups of the second venting channels may be provided.

The first venting channel and the second venting channel may be respectively provided for each group of at least some of the plurality of battery cells.

The first venting channel and the second venting channel may be configured in a form that is recessed inward from an inner surface of the pack case.

The first venting channel and the second venting channel may be configured to extend along a longitudinal direction of the battery cell, respectively.

A plurality of first venting channels and a plurality of second venting channels may be provided to be arranged along a stacking direction of the battery cells, respectively.

The pack case may have a third venting channel configured as a hollow space therein, connected to the first venting channel and the second venting channel, and configured to communicate with an outside of the pack case.

The pack case may include a base frame configured to have the plurality of battery cells seated thereon and having the first venting channel formed in an inner space, an cover frame configured to cover the top of the plurality of battery cells and having the second venting channel formed in an inner space, and a side frame extending upward from edges of the base frame and having the third venting channel formed in an inner space.

The pack case may include a venting device communicating with the third venting channel and configured to discharge venting gas in the third venting channel to the outside.

The pack case may include a cross-beam configured to group the plurality of battery cells and having a fourth venting channel formed in an inner space so as to communicate with the first venting channel, the second venting channel, and the third venting channel.

The pack case may have a cooling channel formed on both sides of the plurality of battery cells and configured to allow a cooling medium to flow therethrough.

The cooling channel may include a lower cooling channel located below the first venting channel, and an upper cooling channel located above the second venting channel.

The battery pack may further include a cooling plate in which the first venting channel, the second venting channel, and the cooling channel are formed.

The battery pack may further include a cooling fin provided between some of the plurality of battery cells.

The cooling fin may be configured such that its end is inserted into a side surface of the pack case where at least one of the first venting channel and the second venting channel is formed.

The battery pack may further include a plurality of module cases configured such that the plurality of battery cells are stored therein and such that a top surface and a bottom surface are at least partially open.

In another aspect of the present disclosure, there is provided a vehicle including a battery pack according to the present disclosure.

### Advantageous Effects

According to one aspect of the present disclosure, it is possible to minimize the flow of fluids such as venting gas or the like toward adjacent battery cells and/or battery modules. Therefore, thermal runaway propagation between the battery cells and/or battery modules can be prevented or suppressed, thereby ensuring the safety and reliability of the battery pack.

In addition, according to another aspect of the present disclosure, the safe venting performance of the battery pack can be secured by quickly discharging venting gas or the like generated in the battery module to the outside of the battery pack.

In addition, according to another aspect of the present disclosure, since the battery cells are directly cooled from both sides by a cooling medium, the efficient cooling performance of the battery pack can be secured.

Furthermore, according to another aspect of the present disclosure, events due to thermal runaway of a device equipped with a battery pack, such as fire or explosion, can be prevented or delayed.

In addition, the present disclosure may have various other effects, and these will be described in the respective embodiments, or description of effects that may be easily inferred by those skilled in the art will be omitted.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is an overall perspective view of a battery pack according to an embodiment of the present disclosure.
FIG. 2 is an exploded perspective view of a battery pack according to an embodiment of the present disclosure.
FIG. 3 is a perspective view of a battery cell included in a battery pack according to an embodiment of the present disclosure.
FIG. 4 is a cross-sectional view of a battery pack according to an embodiment of the present disclosure, which may be a cross-sectional view taken along, for example, line I - I' in FIG. 1.
FIG. 5 is an interior perspective view of a battery pack according to an embodiment of the present disclosure, which illustrates a first venting channel.
FIG. 6 is a bottom perspective view of an cover frame of a battery pack according to an embodiment of the present disclosure, which illustrates a second venting channel.
FIG. 7 is a cross-sectional view of a battery pack when viewed from above according to an embodiment of the present disclosure, which may be a cross-sectional view taken along, for example, line II - II' in FIG. 1.
FIG. 8 is a cross-sectional view of a battery pack according to an embodiment of the present disclosure, which may be a cross-sectional view taken along, for example, line III - III' in FIG. 1.
FIG. 9 is an enlarged perspective view of the internal configuration of a battery pack according to an embodiment of the present disclosure, which illustrates a communication hole.
FIG. 10 is a cross-sectional view of a battery pack according to an embodiment of the present disclosure, which may be a cross-sectional view taken along, for example, line I - I' in FIG. 1.
FIG. 11 is an enlarged view of part A in FIG. 10, which illustrates a cooling fin.
FIG. 12 is an enlarged cross-sectional view of a battery pack according to another embodiment of the present disclosure.
FIG. 13 is a cross-sectional view of a battery pack according to another embodiment of the present disclosure.
FIG. 14 is an exploded perspective view of a battery pack according to another embodiment of the present disclosure.
FIG. 15 is a cross-sectional view of a battery pack according to another embodiment of the present disclosure.
FIG. 16 is a bottom perspective view of a battery module included in a battery pack according to another embodiment of the present disclosure.
FIG. 17 is a schematic perspective view of a vehicle including a battery pack according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, and does not represent the entire scope of the disclosure, so it should be understood that other equivalents and modifications could be made thereto without departing from the scope of the disclosure at the time of filing the present disclosure.

In addition, the present disclosure may include various embodiments. Redundant descriptions of substantially the same or similar configurations will be omitted from respective embodiments, and a description will be made based on differences therebetween.

Meanwhile, although terms indicating directions such as up(ward), down(ward), left, right, front, and back are used in this specification, it is obvious to those skilled in the art to which the present disclosure pertains that these terms are only for convenience of explanation with reference to the relevant drawings and may vary depending on the position of the target object or the position of the observer.

For example, in the embodiment of the present disclosure, the X-axis direction shown in the drawing may indicate a left-right direction, the Y-axis direction may indicate a front-back direction perpendicular to the X-axis direction on the horizontal plane (X-Y plane), and the Z-axis direction may indicate an up-down direction (vertical direction) perpendicular to both the X-axis direction and the Y-axis direction.

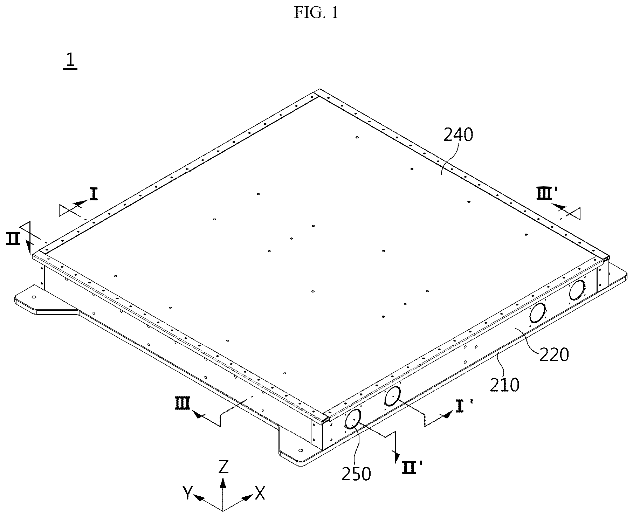

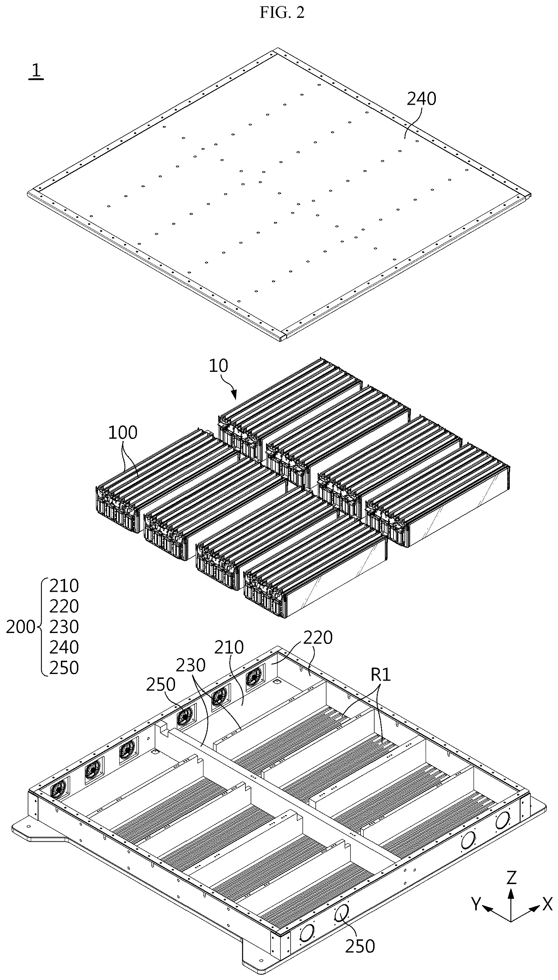

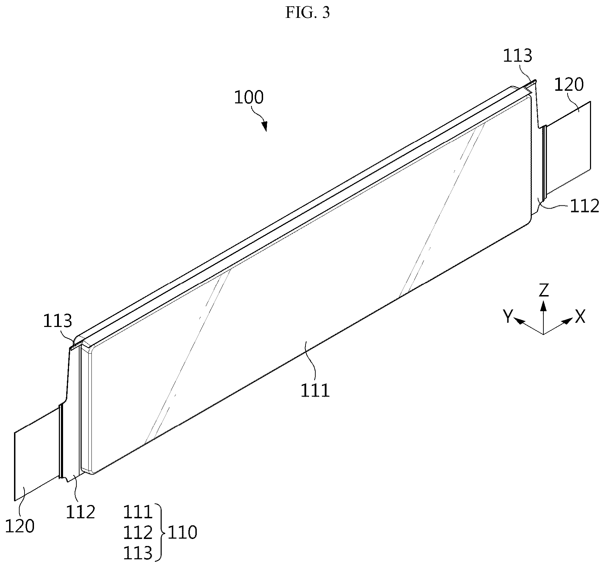

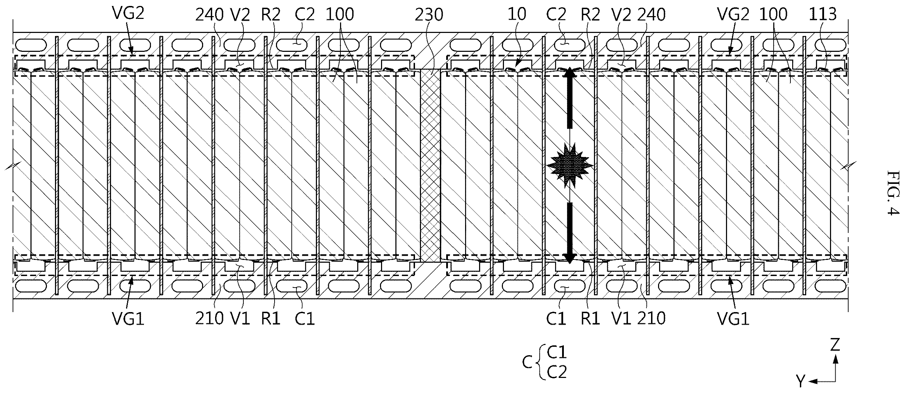

FIG. 1 is an overall perspective view of a battery pack according to an embodiment of the present disclosure, FIG. 2 is an exploded perspective view of a battery pack according to an embodiment of the present disclosure, and FIG. 3 is a perspective view of a battery cell included in a battery pack according to an embodiment of the present disclosure. In addition, FIG. 4 is a cross-sectional view of a battery pack according to an embodiment of the present disclosure, which may be a cross-sectional view taken along, for example, line I - I' in FIG. 1.

Referring to FIGS. 1 to 4, a battery pack 1 according to an embodiment of the present disclosure may include a battery cell 100 and a pack case 200.

First, referring to FIG. 2, a plurality of battery cells 100 may be included. In addition, although not shown in the drawing, the plurality of battery cells 100 may include an electrode assembly, a cell case that stores the electrode assembly, and an electrode lead that is connected to the electrode assembly and extends to the outside of the cell case, thereby functioning as an electrode terminal. In this case, the plurality of battery cells 100 may be electrically connected to each other.

The plurality of battery cells 100 may be stacked in at least one direction. For example, as shown in FIG. 2, the plurality of battery cells 100 may be disposed side by side in the front-back direction (X-axis direction) while standing in the vertical direction (Z-axis direction). As a result, it may be an efficient structure for increasing energy density by stacking multiple battery cells 100 face to face. In addition, if the battery cells 100 are arranged in this manner, it is easy to control the venting in one direction.

According to an embodiment of the present disclosure, as shown in FIG. 3, the battery cell 100 may be a pouch-type secondary battery. A cell case 110 of such a pouch-type secondary battery may be configured as a pouch in which a metal layer made of aluminum is interposed between polymer layers.

For example, the battery cell 100 according to an embodiment of the present disclosure may have a long side along the X-axis direction in FIG. 3 and a short side along the Z-axis direction, and may have a thickness along the Y-axis direction in FIG. 3, which is smaller than the length of the X-axis or Z-axis direction, thereby forming a substantially rectangular plate-shaped cell. In this case, an electrode lead 120 may be formed on the short side of the battery cell 100 (in the Y-axis direction in FIG. 3).

The cell case 110 of the battery cell 100 may store the electrode assembly in a receiving portion 111, and the edges of the receiving portion 111 may be heat-fused to form a sealing portion 112. The sealing portion 112 may be provided on three of the four edges of the battery cell 100. For example, each battery cell 100 may have the sealing portions 112 facing the front-back direction (X-axis direction in FIG. 3) and the upward direction (+Z-axis direction in FIG. 3), excluding the downward direction in which the sheet is folded, and the receiving portion 111 facing the left-right direction (Y-axis direction).

In addition, the battery cell 100 may include a folding portion 113 configured to be folded at one of the sealing portions 112, which has no electrode lead 120 extending outward. That is, the sealing portion 112 that does not have the electrode lead 120 may include the folding portion 113.

The present disclosure is not limited to a specific type or form of the battery cell 100, and various battery cells 100 known at the time of filing the present disclosure may be applied to configure the battery pack 1 of the present disclosure. In the present embodiment, although a pouch-type secondary battery with high energy density and easy stacking will be described as shown in the drawing, it is obvious that a cylindrical or prismatic secondary battery may also be applied to the battery cell 100.

The plurality of battery cells 100 may be modularized into one or more battery modules 10. That is, the battery pack 1 according to the present disclosure may include multiple battery modules 10, and a plurality of battery cells 100 included in the battery pack 1 may be divided and included in the multiple battery modules 10. In this case, the plurality of battery cells 100 included in the battery module 10 may be electrically connected to each other.

The pack case 200 may be configured to store a plurality of battery cells 100. The pack case 200 may be configured in the form of a box including multiple frames. The pack case 200 may be made of a material capable of securing mechanical strength, such as metal, for example, steel or SUS, or plastic, or may include such a material in order to safely protect the battery cells 100 stored therein.

In addition, the pack case 200 may have a first venting channel V1 and a second venting channel V2 formed therein. The first venting channel V1 and the second venting channel V2 may indicate passages through which venting gas or the like flows. The first venting channel V1 and the second venting channel V2 may be configured such that venting gas generated in the battery cell 100 flows in and moves.

The first venting channel V1 and the second venting channel V2 may be provided on both sides of the plurality of battery cells 100. That is, the first venting channel V1 may be provided on one side of the plurality of battery cells 100, and the second venting channel V2 may be provided on the other side of the plurality of battery cells 100. The first venting channel V1 and the second venting channel V2 may be configured to face the plurality of battery cells 100.

The first venting channel V1 and the second venting channel V2 may be configured to extend in at least one direction. In addition, the first venting channel V1 and the second venting channel V2 may be configured to face each other symmetrically.

According to the above-mentioned configuration of the present disclosure, the venting gas or the like generated from the battery cell 100 may be directly introduced into the first venting channel V1 and the second venting channel V2 and may flow therethrough. As described above, the battery pack 1 according to the present disclosure may discharge, when high-temperature gas or flame is generated due to a thermal event occurring in a battery cell 100, the venting gas in both directions of the battery cell 100. Accordingly, the high-temperature gas or flame may be quickly discharged to the outside of the battery pack 1 through the first venting channel V1 and the second venting channel V2, thereby minimizing thermal propagation to other battery cells 100.

In particular, referring to FIG. 4, the first venting channel V1 may be provided at the bottom of the plurality of battery cells 100, and the second venting channel V2 may be provided at the top of the plurality of battery cells 100.

Accordingly, when a thermal event occurs in the battery cell 100, the venting gas or the like may move directly to the first venting channel V1 located at the bottom and the second venting channel V2 located at the top. According to the above-mentioned configuration of the present disclosure, when high-temperature gas or flame is discharged from the battery cell 100 in a situation such as thermal runaway, the venting gas or the like may be quickly discharged in both directions of the battery cell 100. Therefore, the safety of the battery pack 1 may be increased.

Venting of the battery cell 100 may be guided in the direction in which the folding portion 113 is located. As illustrated in FIG. 4, the battery cell 100 may be provided in a standing state while the folding portion 113 faces upward. Although the embodiment in FIG. 4 or the like shows the folding portion 113 facing upward, unlike the above embodiment, the battery cell 100 may be disposed so that the folding portion 113 faces downward.

As disclosed in the present disclosure, in a case where the first venting channel V1 and the second venting channel V2 are located at the top and bottom of the battery cells 100, the venting gas discharged from the folding portion 113 that is unfolded when the internal pressure of the battery cell 100 increases may be directly discharged to the first venting channel V1 or the second venting channel V2, regardless of the arrangement direction of the folding portion 113.

For example, referring to FIG. 4, in a case where the battery cell 100 of the present disclosure is configured as a pouch-type battery cell, the first venting channel V1 and the second venting channel V2 may be provided for every two battery cells 100, respectively, and the two battery cells 100 may be configured to face each other. That is, the folding portions 113 of the two battery cells 100 may also be configured to face each other. In this case, the folding portion 113 may be provided in the second venting channel V2. As an example, as disclosed in the embodiment illustrated in FIG. 4, the folding portion 113 may be configured to be stored inside the second venting channel V2. Alternatively, the folding portion 113 may be configured to be folded toward the second venting channel V2 so that it is unfolded when the internal pressure of the battery cell 100 increases, and positioned inside the second venting channel V2.

In addition, referring to FIG. 4, multiple first venting channels V1 and second venting channels V2 may respectively form a group. Specifically, the multiple first venting channels V1 may form a first group VG1 at the bottom of the battery cells 100, and the multiple second venting channels V2 may form a second group VG2 at the top of the battery cell 100. There may be a plurality of groups of the first venting channels V1 and second venting channels V2, as described above. That is, a plurality of first groups VG1 and a plurality of second groups VG2 may be provided, respectively.

The plurality of first groups VG1 and second groups VG2 may be provided for each battery module 10. That is, the first group VG1 and the second group VG2 may be provided for each battery module 10.

According to the above-mentioned configuration of the present disclosure, since the first venting channels V1 and the second venting channels V2 are grouped and provided for each battery module 10, gas generated from any battery module 10 may independently move to the first venting channel V1 and the second venting channel V2. According to the above-mentioned configuration of the present disclosure, the venting gas may be prevented from moving toward battery cells 100 provided in other battery modules 10, thereby avoiding thermal damage to other battery modules 10 as far as possible. Accordingly, thermal runaway propagation inside the battery pack 1 may be prevented or suppressed, so that the safety and reliability of the battery pack 1 may be ensured.

In addition, each of the first venting channel V1 and the second venting channel V2 may respectively be provided for each group of at least some of the plurality of battery cells 100. Each of the first venting channel V1 and the second venting channel V2 may be configured to be connected to at least some of the plurality of battery cells 100. For example, as disclosed in the embodiment illustrated in FIG. 4, the first venting channel V1 and the second venting channel V2 may each be provided for every two battery cells 100. Accordingly, the venting gas discharged from any battery cell 100 may be prevented from moving to other first venting channels V1 and second venting channels V2.

According to the above-mentioned configuration of the present disclosure, the movement of the venting gas toward other battery cells 100 may be suppressed by the first venting channel V1 provided for each group of some battery cells 100, thereby minimizing thermal damage to other battery cells 100. Accordingly, thermal runaway propagation may be prevented or suppressed inside the battery pack 1, thereby ensuring the safety and reliability of the battery pack 1.

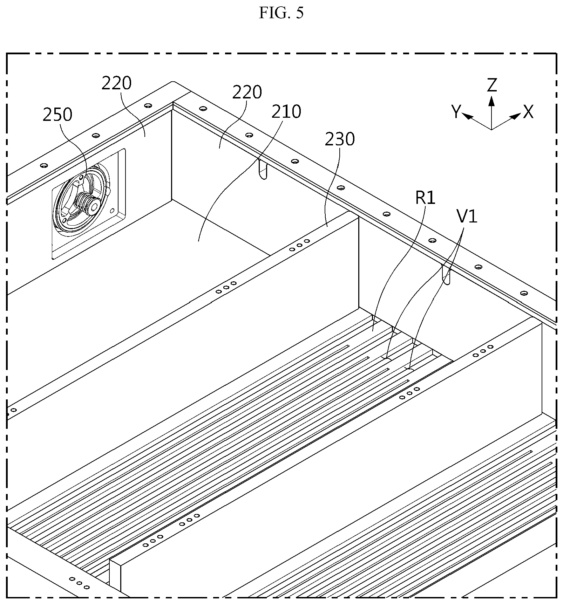

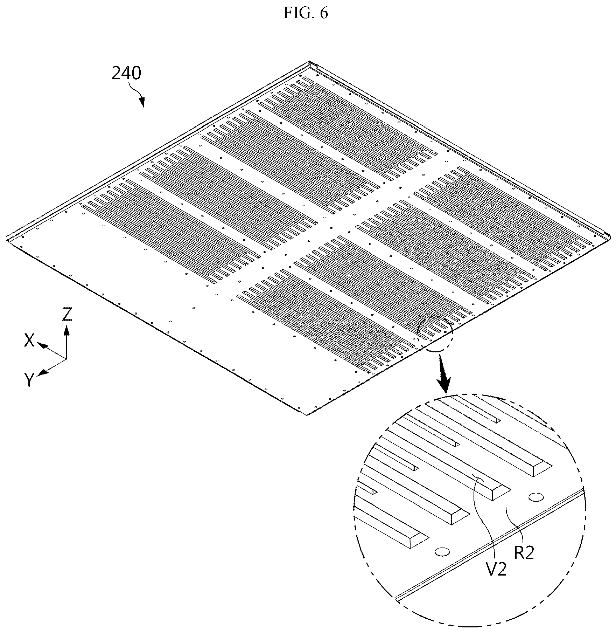

Hereinafter, the first venting channel V1 and the second venting channel V2 will be described in more detail with reference to FIGS. 5 and 6.

FIG. 5 is an interior perspective view of a battery pack according to an embodiment of the present disclosure, which illustrates a first venting channel. In addition, FIG. 6 is a bottom perspective view of an cover frame of a battery pack according to an embodiment of the present disclosure, which illustrates a second venting channel.

More specifically, referring to FIG. 5, a plurality of first ribs R1 may be formed on the pack case 200, and first venting channels V1 may be formed by the plurality of first ribs R1 that are spaced apart from each other. That is, the first venting channel V1 may be defined as a space between two adjacent first ribs R1, and may provide a predetermined space in which venting gas flows. In this case, the first rib R1 may be configured to extend in at least one direction.

In particular, the plurality of first ribs R1 may be formed on the bottom surface of the pack case 200. A plurality of battery cells 100 may be configured to be seated on the plurality of first ribs R1. That is, the plurality of battery cells 100 may be stored inside the pack case 200 while being supported by the first ribs R1.

Likewise, referring to FIG. 6, the second venting channels V2 may be formed by a plurality of second ribs R2. In particular, the plurality of second ribs R2 may be formed on the upper side of the pack case 200. The plurality of second ribs R2 may be configured to be seated on the plurality of battery cells 100.

In general, when gas is emitted from the battery cell 100, electrode plate particles or active material particles may be discharged from the battery cell 100 to the outside in a state of being heated to a high temperature, and the high-temperature particles may appear in the form of sparks. The battery pack 1 according to the present disclosure, even high-temperature particles are emitted from the battery cell 100, may prevent them from easily escaping to the outside of the battery pack 1, and may cause them to move through the spaces between the first ribs R1 and/or the second ribs R2, sufficiently lowering the temperature, and then escape, thereby preventing them from acting as an ignition source outside the battery pack 1.

Referring to FIGS. 5 and 6, the first venting channel V1 and the second venting channel V2 may be configured to extend along the longitudinal direction of the battery cell 100. The first venting channel V1 and the second venting channel V2 may be configured in the shape of a straight line. In particular, the battery cell 100 may be configured as a pouch-type battery cell, and the lengths of the first venting channel V1 and the second venting channel V2 may be configured to correspond to the length of the battery cell 100.

The first rib R1 and the first venting channel V1 may be formed by extruding the pack case 200. As the pack case 200 is extruded, the first ribs R1 may be formed to extend in one direction (X-axis direction) along the extrusion direction of the pack case 200. According to the above-mentioned configuration of the present disclosure, since the first rib R1 is integrally formed with the pack case 200, the process of joining the first rib R1 to the pack case 200 is unnecessary, and since there is no defect at the joining portion, the venting gas is highly unlikely to spread to another first venting channel V1. Meanwhile, the second rib R2 and the second venting channel V2 may be configured in the same manner as those described above.

In addition, the first venting channel V1 and the second venting channel V2 may each be provided in plurality. The plurality of first venting channels V1 and the plurality of second venting channels V2 may be arranged along the stacking direction of the battery cells 100, respectively. In addition, the plurality of first venting channels V1 and the plurality of second venting channels V2 may be disposed parallel to each other, respectively.

According to the above-mentioned configuration of the present disclosure, since the first venting channels V1 and the second venting channels V2, which extend along one direction, are disposed to be spaced apart from each other in the stacking direction of the battery cells 100, when a thermal event occurs in a battery cell 100, the venting gas flowing into the first venting channel V1 and the second venting channel V2 may be further prevented from moving over the rib R to another first venting channel V1 and the second venting channel V2. In addition, the venting gas flowing in the first venting channel V1 and the second venting channel V2 may be prevented from spreading in all directions, and may quickly move to the outside along the extension direction of the first venting channel V1 and the second venting channel V2.

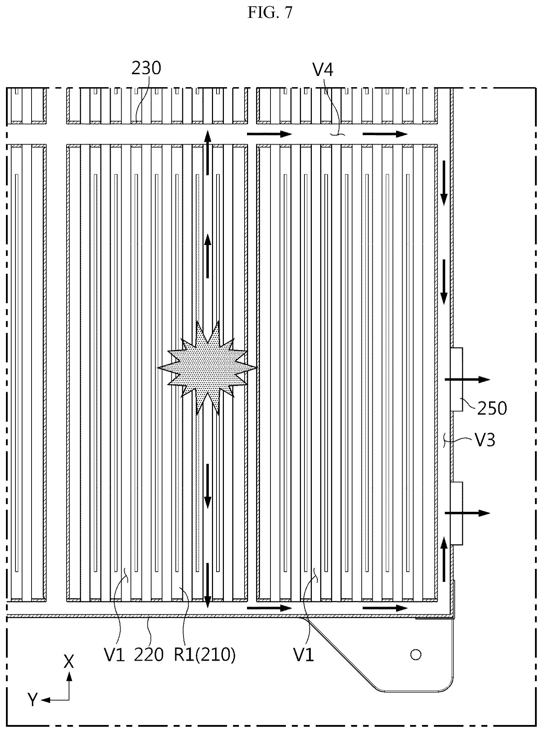

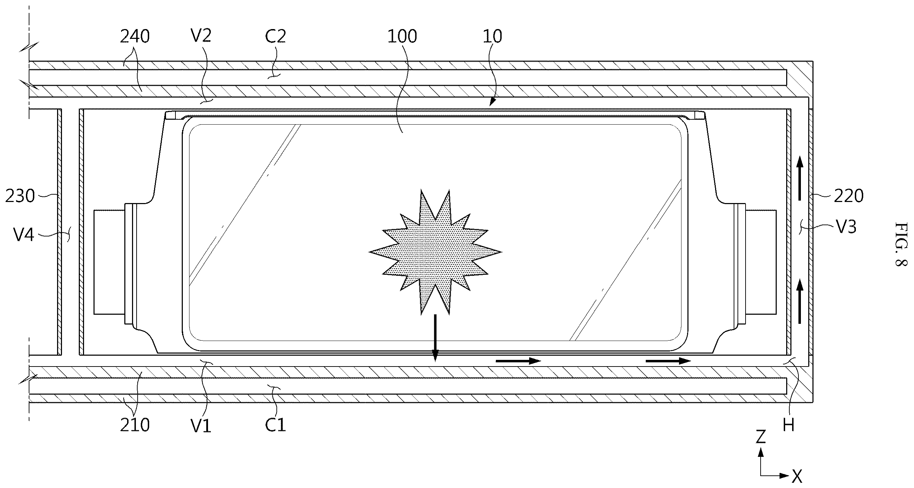

FIG. 7 is a cross-sectional view of a battery pack when viewed from above according to an embodiment of the present disclosure, which may be a cross-sectional view taken along, for example, line II - II' in FIG. 1. In addition, FIG. 8 is a cross-sectional view of a battery pack according to an embodiment of the present disclosure, which may be a cross-sectional view taken along, for example, line III - III' in FIG. 1.

Referring to FIG. 1, FIG. 2, and FIG. 7, the pack case 200 may include a base frame 210 and a plurality of side frames 220.

The base frame 210 may be configured such that a plurality of battery cells 100 are seated thereon. The base frame 210 may form the bottom surface of the pack case 200 and may be configured in the form of a square plate. In addition, the base frame 210 may have a flat upper surface so that the battery cells 100 or the battery module 10 may be stably seated thereon.

The plurality of side frames 220 may be configured to extend upward from respective edges of the base frame 210. The plurality of side frames 220 may be configured to surround the plurality of battery cells 100. More specifically, the plurality of side frames 220 may include a right wall located at the +X-direction end of the base frame 210, a rear wall located at the +Y-direction end, a left wall located at the -X-direction end, and a front wall located at the -Y-direction end, respectively, to form the side surfaces of the pack case 200.

In addition, the pack case 200 may include a cross-beam 230. The cross-beam 230 may be configured to partition the inner space of the pack case 200. The cross-beam 230 may be configured to partition and group a plurality of battery cells 100 or a plurality of battery modules 10. The cross-beam 230 may be configured to extend along the left-right direction and/or the front-back direction of the pack case 200.

A plurality of cross-beams 230 may be provided. The cross-beam 230 may be configured to connect the side frames 220 facing each other, among the plurality of side frames 220. For example, as shown in FIG. 2, the plurality of battery modules 10 may be partitioned and disposed into four rows and two columns by the cross-beams 230

The pack case 200 may further include a cover frame 240. The cover frame 240 may be configured to cover the top of the plurality of battery cells 100. The cover frame 240 may be provided to form the upper side of the pack case 200. The cover frame 240 may be coupled to the side frame 220. Alternatively, the cover frame 240 may be provided integrally with the side frame 220.

A third venting channel V3 may be formed in the pack case 200. The third venting channel V3 may be configured as a hollow space inside the pack case 200. That is, the third venting channel V3 may be defined as a hollow space formed in one of the frames of the pack case 200. The third venting channel V3 may be configured to be connected to the first venting channel V1 and the second venting channel V2. In addition, the third venting channel V3 may be configured to communicate with the outside of the pack case 200.

As a more specific example, as disclosed in the embodiment illustrated in FIGS. 7 and 8, the first venting channel V1 may be formed in the inner space of the base frame 210, and the second venting channel V2 may be formed in the inner space of the cover frame 240. In addition, the third venting channel V3 may be formed in the inner space of the side frames 220. The third venting channel V3 may be formed in all four walls of the side frames 220.

Accordingly, as indicated by the bold arrows in FIGS. 7 and 8, the venting gas generated from the battery cell 100 may move to the first venting channel V1 formed in the base frame 210 and the second venting channel V2 formed in the cover frame 240, and then move to the third venting channel V3 formed in the side frame 220. This venting gas may be discharged to the outside of the pack case 200.

Referring to FIG. 7, the pack case 200 may include a venting device 250.

The venting device 250 may be configured to discharge gas generated from the battery cell 100 to the outside of the pack case 200. The venting device 250 may be configured to be opened by the pressure of the venting gas when the internal pressure of the pack case 200 increases due to the venting gas generated therein, thereby discharging the venting gas to the outside of the pack case 200.

The venting device 250 may be configured to be opened and closed depending on the internal pressure of the pack case 200. Alternatively, the venting device 250 may be configured in the form of a hole. The present disclosure is not limited to a specific type or form of the venting device 250, and various venting devices 250 known at the time of filing the present disclosure may be applied to configure the battery pack 1 of the present disclosure.

Specifically, the venting device 250 may be provided on the side of the pack case 200, that is, on the side frame 220. A plurality of venting devices 250 may be provided. The venting device 250 may be provided in one or more side frames 220 among the multiple side frames 220. One venting device 250 may be formed on each of two or more side frames 220, or two or more venting devices 250 may be formed on each side frame 220.

Meanwhile, the number of installations or locations of the venting devices 250 described in the embodiment in FIG. 7 or the like are merely examples, and may be changed to various other values or locations.

The venting device 250 may be provided to communicate with the third venting channel V3 formed in the side frame 220. Accordingly, the venting gas of the third venting channel V3 may be configured to be discharged to the outside of the pack case 200 through the venting device 250.

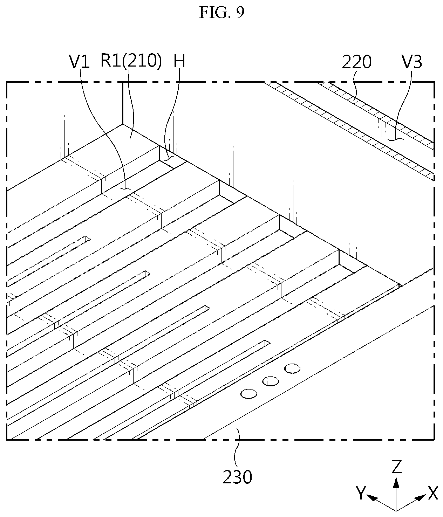

In addition, FIG. 9 is an enlarged perspective view of the internal configuration of a battery pack according to an embodiment of the present disclosure, which illustrates a communication hole.

In addition, in order to connect the first venting channel V1, the second venting channel V2, and the third venting channel V3, the pack case 200 may be formed with a communication hole H. The communication hole H may be configured to communicate the first venting channel V1, the second venting channel V2, and the third venting channel V3 with each other. In the embodiment illustrated in FIGS. 8 and 9, the communication hole H may be provided between the first venting channel V1 and the third venting channel V3. In addition, the communication hole H may be provided between the second venting channel V2 and the third venting channel V3. That is, the communication hole H may be provided between the base frame 210 and the side frame 220 and between the cover frame 240 and the side frame 220.

Referring to FIG. 9, the communication hole H may be provided in the inner surface of the side frame 220. The communication hole H may be provided in the surface of the side frame 220 facing the battery cell 100 or the battery module 10. The communication hole H may be formed by being surrounded by two adjacent ribs R and the side frame 220.

The communication hole H may be provided in plurality. For example, a plurality of communication holes H may be provided along the arrangement direction of the first venting channel V1 and the second venting channel V2. Moreover, a plurality of communication holes H may be respectively provided for each of the first venting channel V1 and the second venting channel V2. That is, the communication holes H may be provided to correspond one-to-one with the plurality of the first venting channels V1 and second venting channels V2. The communication hole H may be provided at each connection between the plurality of the first venting channels V1 and the side frame 220 and between the second venting channels V2 and the side frame 220.

According to the above-mentioned configuration of the present disclosure, venting gas generated from a battery cell 100 may flow into the first venting channel V1 and the second venting channel V2 connected to the relevant battery cell 100, and then move to the third venting channel V3 through the communication holes H connected to the first venting channel V1 and the second venting channel V2. Accordingly, the possibility that the venting gas will spread to other first venting channels V1 and second venting channels V2 may be significantly reduced by the ribs R defining the first venting channel V1 and the second venting channel V2.

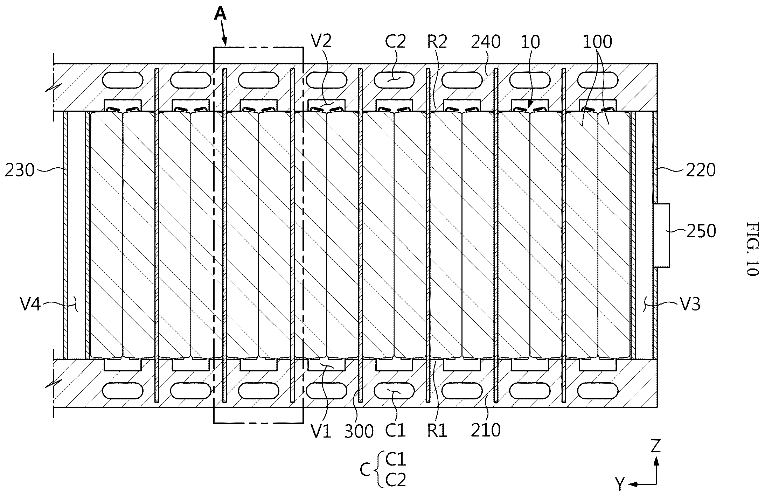

FIG. 10 is a cross-sectional view of a battery pack according to an embodiment of the present disclosure, which may be a cross-sectional view taken along, for example, line I - I' in FIG. 1.

A fourth venting channel V4 may be formed in the pack case 200. The fourth venting channel V4 may be configured as a hollow space inside the pack case 200. That is, the fourth venting channel V4 may be defined as a hollow space formed in one of the frames of the pack case 200. The fourth venting channel V4 may be configured to be connected to the first venting channel V1, the second venting channel V2, and the third venting channel V3. As a more specific example, as disclosed in the embodiments illustrated in FIGS. 7, 8, and 10, the fourth venting channel V4 may be formed in the inner space of the cross-beam 230.

Accordingly, as denoted by the bold arrows in FIG. 7, the venting gas or the like generated from a battery cell 100 may move to the first venting channel V1 formed in the base frame 210 and the second venting channel V2 formed in the cover frame 240, and then move to the fourth venting channel V4 formed in the cross-beam 230 as well as the third venting channel V3 formed in the side frame 220.

According to the above-mentioned configuration of the present disclosure, the venting gas or the like discharged from a battery cell 100 or battery module 10 in contact with the cross-beam 230 may move directly to the fourth venting channel V4 formed in the cross-beam 230, so that the venting gas or the like may be discharged more quickly to the outside of the pack case 200.

In this case, the communication hole H may be configured to communicate the first venting channel V1 with the fourth venting channel V4, and the second venting channel V2 with the fourth venting channel V4. Although not shown in the drawing, the communication hole H may be provided between the first venting channel V1 and the fourth venting channel V4 and between the second venting channel V2 and the fourth venting channel V4. That is, the communication hole H may be provided between the base frame 210 and the cross-beam 230 and between the cover frame 240 and the cross-beam 230. That is, the communication hole H may be provided on both sides of the first venting channel V1 and second venting channel V2 in the longitudinal direction. In addition, the communication hole H may be provided on the outer surface of the cross-beam 230.

According to the above-mentioned configuration of the present disclosure, the venting gas generated from any battery cell 100 may flow into the first venting channel V1 and the second venting channel V2 connected to the relevant battery cell 100, and then move to the fourth venting channel V4 through the communication holes H connected to the first venting channel V1 and the second venting channel V2.

That is, the venting gas may flow into the first venting channel V1 located at the bottom of the battery cell 100 and the second venting channel V2 located at the top thereof, and the venting gas flowing through the first venting channel V1 and the second venting channel V2 may flow into the third venting channel V3 and/or the fourth venting channel V4 through the communication holes H provided on both sides (see the bold arrows in FIG. 7). Thereafter, the venting gas flowing through the fourth venting channel V4 may move to the third venting channel V3. This venting gas may be discharged to the outside of the pack case 200 through the venting device 250 communicating with the third venting channel V3.

According to the above-mentioned configuration of the present disclosure, since the venting gas or the like may move directly to the third venting channel V3 of the side frame 220 equipped with the venting device 250, the venting gas or the like may be quickly discharged to the outside of the pack case 200.

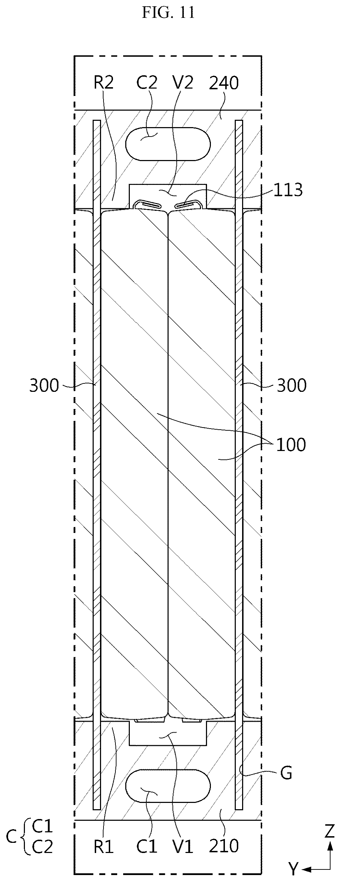

FIG. 11 is an enlarged view of part A in FIG. 10, which illustrates a cooling fin.

Referring to FIG. 11, a cooling channel C may be formed in the pack case 200. The cooling channel C may indicate a passage through which a cooling medium such as cooling water flows. The cooling channel C may be formed in the inner space of the pack case 200. Here, the inner space of the pack case 200 may indicate a predetermined space separately provided inside the pack case 200, or may indicate a hollow space formed inside a plurality of beams or frames constituting the pack case 200.

The cooling channel C may be configured as a hollow space formed inside the frame of the pack case 200 so that a cooling medium may flow through the hollow space. Alternatively, the cooling channel C may be configured in the form of a pipe in the inner space of the frame of the pack case 200.

In particular, the cooling channel C may be provided on both sides of the plurality of battery cells 100. The cooling channel C may include a first cooling channel C1 provided on one side of the plurality of battery cells 100, and a second cooling channel C2 provided on the other side of the plurality of battery cells 100.

According to the above-mentioned configuration of the present disclosure, since the battery cell 100 or the battery module 10 may be cooled from both sides, accumulation of heat energy may be minimized in the battery cell 100. In particular, the cooling performance of the battery pack 1 may be secured by minimizing the heat generation of the battery cell 100 due to the charge/discharge cycle in a normal state of the battery pack 1. In addition, according to the above-mentioned configuration of the present disclosure, the temperature deviation inside the battery cell 100 may be minimized by uniformly cooling the battery cell 100 from both sides.

The cooling channel C may be provided on at least one side of the first venting channel V1 and the second venting channel V2. In addition, the first venting channel V1 and the second venting channel V2 may be configured to face the cooling channel C, respectively. The cooling channel C may be provided parallel to the first venting channel V1 and the second venting channel V2. The first venting channel V1 and the second venting channel V2 may extend along one direction, and the cooling channel C may extend along one direction in which the first venting channel V1 and the second venting channel V2 extend. That is, the cooling channel C may be disposed parallel to the first venting channel V1 and the second venting channel V2. Therefore, the venting gas or the like inside the first venting channel V1 and the second venting channel V2 may be configured to come into contact with the cooling channel C.

For example, although not shown in the drawing, the cooling channel C may be disposed to overlap the first venting channel V1 and the second venting channel V2 in the horizontal direction. In this case, the cooling channel C may be provided between a plurality of first venting channels V1 and a plurality of second venting channels V2. Alternatively, as disclosed in the embodiment illustrated in FIG. 11, the cooling channel C may be disposed to overlap the first venting channel V1 and the second venting channel V2 in the vertical direction.

According to the above-mentioned configuration of the present disclosure, when thermal runaway occurs in the battery cell 100, the heat of the venting gas or flame inside the first venting channel V1 and the second venting channel V2 may be more efficiently cooled by the cooling medium of the cooling channel C.

Furthermore, the cooling channel C may be provided further outward than the first venting channel V1 and the second venting channel V2. That is, it may indicate that the cooling channel C is provided further outward than the first venting channel V1 and the second venting channel V2 relative to a certain battery cell 100.

For example, as disclosed in the embodiment illustrated in FIG. 11, the first cooling channel C1 may be positioned below the first venting channel V1, and the second cooling channel C2 may be positioned above the second venting channel V2.

According to the above-mentioned configuration of the present disclosure, since the first venting channel V1 and the second venting channel V2 are disposed between the battery cells 100 and the cooling channel C, the venting gas or flame generated from the battery cell 100 may quickly move to the first venting channel V1 and the second venting channel V2, and may be cooled by the cooling medium in the cooling channel C. That is, according to the above-mentioned configuration of the present disclosure, the heat of the discharged venting gas or the like may be controlled more efficiently. As a result, the cooling performance of the battery pack 1 may be secured.

The lower cooling channel C1 may be disposed to overlap the first venting channel V1 in the vertical direction. In addition, the first cooling channel C1 may be disposed to overlap the second venting channel V2 in the vertical direction. According to the above-mentioned configuration of the present disclosure, since the first cooling channel C1 and the second cooling channel C2 are respectively provided for each of the first venting channel V1 and the second venting channel V2, the first venting channel V1 and the second venting channel V2 provided on the side of the battery cell 100 where the thermal event occurs may be respectively cooled. Accordingly, the cooling efficiency of the battery pack 1 may be improved.

Referring to FIG. 11, the battery pack 1 according to an embodiment of the present disclosure may further include a cooling fin 300. The cooling fin 300 may be provided between some of the plurality of battery cells 100. In particular, the cooling fin 300 may be configured to partition the plurality of battery cells 100. The cooling fin 300 may be configured to group the plurality of battery cells 100. For example, as illustrated in FIG. 11, the cooling fin 300 may be disposed for every two battery cells 100 so as to group the battery cells 100 into sets of two.

At least one cooling fin 300 may be included in each battery module 10. A plurality of cooling fins 300 may be provided along one direction in which the battery cells 100 are arranged. The plurality of cooling fins 300 may be disposed along the stacking direction of the battery cells 100. In addition, the cooling fin 300 may be configured to extend along the longitudinal direction of the battery cell 100.

The cooling fin 300 may be configured to cool the heat generated when a thermal event occurs in the battery cell 100. The cooling fin 300 may be provided in contact with the battery cell 100. The battery cell 100 may generate heat during use, and if this heat is not properly discharged, the performance of the battery cell 100 cannot be stably guaranteed, and in severe cases, it may lead to thermal runaway, ignition, explosion, or the like of the battery cell. In this regard, when heat is generated from the battery cell 100, the heat may be cooled by the cooling fin 300 transferring the heat.

To this end, the cooling fin 300 may be made of a material having excellent cooling performance. In addition, the cooling fin 300 may be configured to maintain a sealed structure without deformation even under high temperature and high pressure. The cooling fin 300 may be configured as a pad that is thinner than the battery cell 100. For example, the cooling fin 300 may be made of a material such as insulated SUS or aluminum.

According to the above-mentioned configuration of the present disclosure, even if a thermal event occurs in any battery cell 100 that is in contact with the cooling fin 300, the heat of the battery cell 100 may be quickly cooled by the cooling fin 300, thereby maximizing the cooling efficiency of the battery pack 1.

The cooling fin 300 may be provided to extend further upward than the battery cell 100. That is, the vertical height of the cooling fin 300 may be configured to be greater than the vertical height of the battery cell 100.

According to the above-mentioned configuration of the present disclosure, even if a thermal event occurs in a battery cell 100, movement of the venting gas, flame, and/or particles to another group of battery cells 100 may be suppressed. Thermal runaway propagation between the battery cells 100 may be effectively prevented or delayed. Therefore, the safety and reliability of the battery module 10 may be ensured.

Furthermore, in order to improve the fixing force between the pack case 200 and the cooling fin 300, the cooling fin 300 may be configured such that its end is inserted into the pack case 200. In particular, the cooling fin 300 may be configured such that its end is inserted into a side surface of the pack case 200 where at least one of the first venting channel V1 and the second venting channel V2 is formed. For example, the lower end of the cooling fin 300 may be configured to be inserted into the first rib R1 formed on the base frame 210. In addition, the upper end of the cooling fin 300 may be configured to be inserted into the second rib R2 formed on the cover frame 240.

More specifically, referring to FIG. 11, the pack case 200 may have a fixing groove G formed by at least a portion being recessed inward. The fixing groove G may be formed on the first rib R1 and/or the second rib R2. The cooling fin 300 may be configured to be inserted into the fixing groove G. As a result, the upper end and/or the lower end of the cooling fin 300 may come into close contact with the fixing groove G without a gap.

According to the above-mentioned configuration of the present disclosure, since the cooling fin 300 is inserted into the pack case 200 and supported on both sides, the fixing force between the cooling fin 300 and the pack case 200 may be further improved. Furthermore, according to the above-mentioned configuration of the present disclosure, it is possible to reduce the possibility that the cooling fin 300 is pushed out by high-temperature and high-pressure venting gas or flame, or that the cooling fin 300 is deformed into a bent shape by the internal pressure of the venting gas so that the battery cell 100 and the cooling fin 300 are separated. As a result, the arrangement state of the battery cell 100 and the cooling fin 300 may be stably maintained, thereby improving the cooling performance.

In addition, the sealing force between the end of the cooling fin 300 and the pack case 200 may be stably secured. Therefore, according to the above-mentioned configuration, the plurality of battery cells 100 may be more reliably partitioned and separated, and thus the thermal propagation prevention performance between the battery cells 100 may be further improved.

Furthermore, as disclosed in the embodiment illustrated in FIG. 11, the cooling fin 300 may be configured such that its end is interposed between the first venting channel V1 and/or the second venting channel V2. Furthermore, the cooling fin 300 may be configured such that its end is interposed between the first cooling channel C1 and/or the second cooling channel C2.

According to the above-mentioned configuration of the present disclosure, the venting gas or the like in the venting channels V1 and V2 may be cooled by the cooling fin 300 as well as the cooling channel C. Accordingly, the cooling efficiency of the battery pack 1 may be further improved.

In addition, according to the above-mentioned configuration of the present disclosure, the end of the cooling fin 300 may be configured to partition a plurality of first venting channels V1 and/or second venting channels V2. Therefore, the plurality of first venting channels V1 and/or second venting channels V2 may be more reliably partitioned and separated, thereby further improving the thermal propagation prevention performance between the battery cells 100.

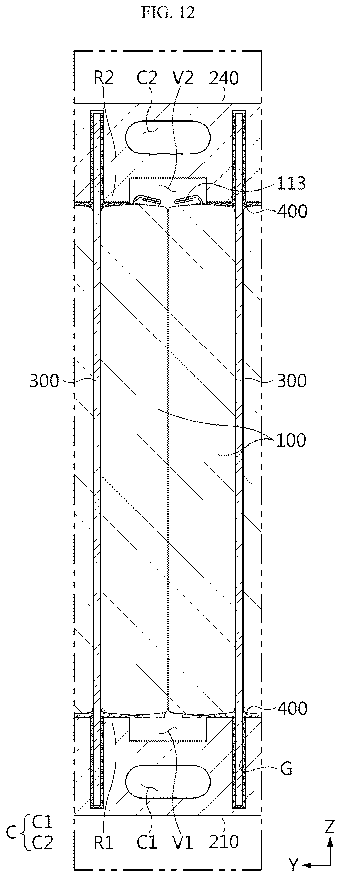

FIG. 12 is an enlarged cross-sectional view of a battery pack according to another embodiment of the present disclosure.

Referring to FIG. 12, the battery pack 10 according to an embodiment of the present disclosure may further include a thermally conductive adhesive 400. The thermally conductive adhesive 400 may be provided between the battery cell 100 and the pack case 200. In particular, the thermally conductive adhesive 400 may be provided on the side where the end of the cooling fin 300 is located. For example, the thermally conductive adhesive 400 may be provided on the inner surface of the fixing groove G.

The thermally conductive adhesive 400 may be configured to transfer heat between the battery cell 100 and the pack case 200. In addition, the thermally conductive adhesive 400 may be configured to transfer heat between the cooling fin 300 and the pack case 200.

According to the above-mentioned configuration of the present disclosure, the thermally conductive adhesive 400 may cause heat to easily transfer between the battery cell 100 and the pack case 200 and between the cooling fin 300 and the pack case 200, so that the heat generated from the battery cell 100 may be appropriately discharged to the outside through the pack case 200 and the cooling fin 300. Accordingly, the cooling performance for the battery module 10 may be stably secured.

The thermally conductive adhesive 400 may include a material capable of transmitting heat. In particular, the thermally conductive adhesive 400 may be made of a resin material, and in this case, the thermally conductive adhesive 400 may be referred to as a thermal resin. The thermally conductive adhesive 400 may include one or more materials among various materials, such as urethane, silicone, and epoxy. The thermally conductive adhesive 400 may be expressed as other terms such as a TIM (Thermal Interface Material), potting resin, or the like, and various thermally conductive adhesives or TIMs known at the time of filing of the present disclosure may be used as a material of the thermally conductive adhesive 400 of the battery pack 10 according to the present disclosure.

The thermally conductive adhesive 400 may be interposed between all the battery cells 100 provided in the battery module 10 and the pack case 200. That is, the thermally conductive adhesive 400 may be configured to be in direct contact with all the battery cells 100 included in the battery module 10. According to this implemented configuration of the present disclosure, heat dissipation may be performed through the thermally conductive adhesive 400 for all the battery cells 100 included in the battery module 10. Therefore, the overall cooling performance of the battery module 10 may be further improved.

In addition, the thermally conductive adhesive 400 may be configured to fix the battery cell 100 to the pack case 200. To this end, the thermally conductive adhesive 400 may include an adhesive component.

In addition, the thermally conductive adhesive 400 may be configured to fill the empty space between the battery cell 100 and the pack case 200. Since the receiving portion 111 of the battery cell 100 is not flat enough to conform to the shape of the pack case 200, an empty space may be formed between the battery cell 100 and the pack case 200. However, according to the above-described configuration of the present disclosure, since the thermally conductive adhesive 400 is interposed between the battery cell 100 and the pack case 200 so as to conform to the shape of the receiving portion 111, heat may more reliably transfer between the battery cell 100 and the pack case 200.

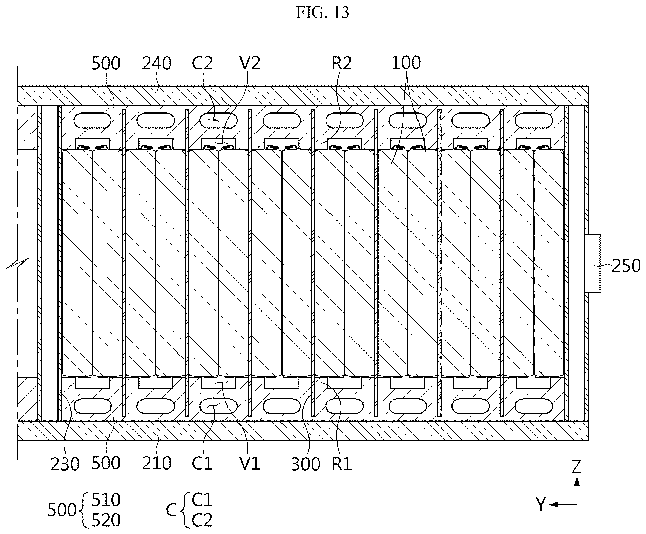

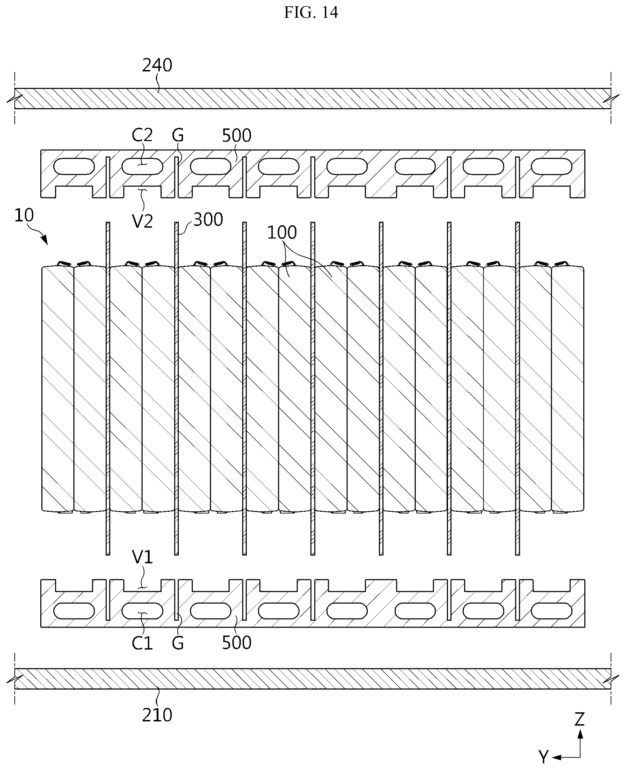

FIG. 13 is a cross-sectional view of a battery pack according to another embodiment of the present disclosure, and FIG. 14 is an exploded perspective view of a battery pack according to another embodiment of the present disclosure.

Referring to FIGS. 13 and 14, the battery pack 10 according to an embodiment of the present disclosure may further include a cooling plate 500. The cooling plate 500 may be provided inside the pack case 200. The cooling plate 500 may be provided between the pack case 200 and the battery cell 100. The cooling plate 500 may be provided at the top and bottom of the battery cell 100, respectively.

A first venting channel V1, a second venting channel V2, and a cooling channel C may be formed in the cooling plate 500. That is, unlike the embodiments illustrated in FIGS. 1 to 12, the first venting channel V1, the second venting channel V2, and the cooling channel C may be formed in the cooling plate 500, instead of the pack case 200, in the present embodiment. In addition, the first rib R1, the second rib R2, and/or the fixing groove G described above may also be formed on the cooling plate 500 in the same manner.

A plurality of cooling plates 500 may be provided for each battery module 10. The cooling plates 500 may be provided at the top and bottom of the battery cells 100 in each battery module 10. The cooling plate 500 may be provided for each storage space of the pack case 200 of the battery module 10. That is, the cooling plate 500 and the battery cell 100 may be configured as a module.

According to the above-mentioned configuration of the present disclosure, the cooling plate 500, the battery module 10, and the pack case 200 may be manufactured separately and then simply assembled to produce the venting structure of the battery cells 100 such as the first venting channel V1 and the second venting channel V2. Accordingly, the assemblability may be secured during the manufacturing of the battery pack 10, and the cost and time may be reduced, thereby improving productivity.

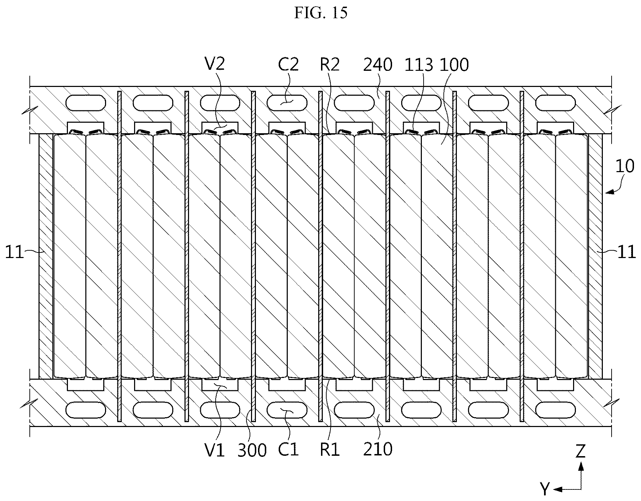

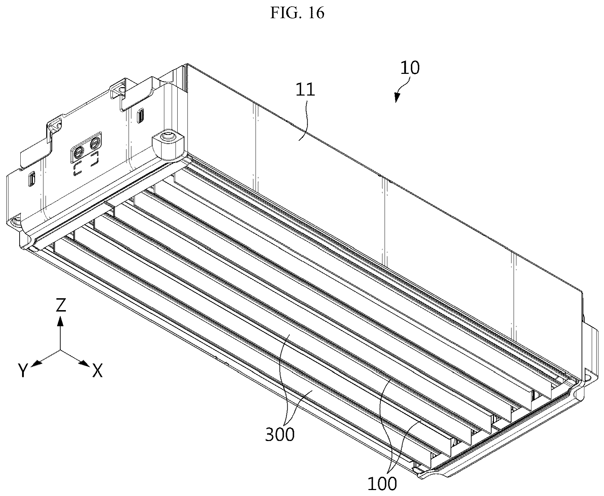

FIG. 15 is a cross-sectional view of a battery pack according to another embodiment of the present disclosure, and FIG. 16 is a bottom perspective view of a battery module included in a battery pack according to another embodiment of the present disclosure.

The battery module 10 included in the battery pack 1 according to the present disclosure may further include a module case 11. The module case 11 may be configured to have an empty space formed therein and store at least some of the plurality of battery cells 100 in the inner space. In particular, the module case 11 may be configured to store the battery cells 100. That is, the module case 11 may be a boundary that groups the plurality of battery cells 100 into several battery modules 10 and physically confines the inner space of each battery module 10.

In addition, although not shown in the drawing, the battery module 10 may include a bus-bar assembly and/or a module terminal electrically connected to the plurality of battery cells 100 stored therein.

Furthermore, the bottom surface and top surface of the module case 11 may be configured to be at least partially open. For example, although not shown in the drawing, a venting hole may be formed on the top surface and the bottom surface of the module case 11, respectively. The venting hole may be formed by perforating the bottom surface of the module case 11. The venting hole may be configured so that gas generated from the battery cell 100 stored inside the module case 11 is discharged to the outside of the module case 11.

Alternatively, as disclosed in the embodiment illustrated in FIG. 15, the top surface and the bottom surface of the module case 11 may be configured to be completely open. Accordingly, the module case 11 may be configured to cover four of the six sides of the plurality of battery cells 100, excluding the top and bottom sides. In this case, the module case 11 may be configured in a square shape when viewed from above.

According to the above-mentioned configuration of the present disclosure, venting gas or flame generated from the battery cell 100 inside the module case 11 may be directly introduced into the first venting channel V1 and the second venting channel V2 provided at the top and bottom. Accordingly, the venting gas or the like generated in the battery module 10 may be quickly discharged to the outside of the battery pack 1, thereby ensuring the safe venting performance of the battery pack 1.

In addition, according to the above-mentioned configuration of the present disclosure, since the top surface and the bottom surface of the module case 11 do not exist, the battery cell 100 may directly face the cooling channel C. In particular, the edge of the battery cell 100 that is not provided with the folding portion 113 may directly face the cooling channel C. Accordingly, the cooling medium in the cooling channel C may directly cool the battery cell 100, so that the efficient cooling performance of the battery pack 1 may be secured.

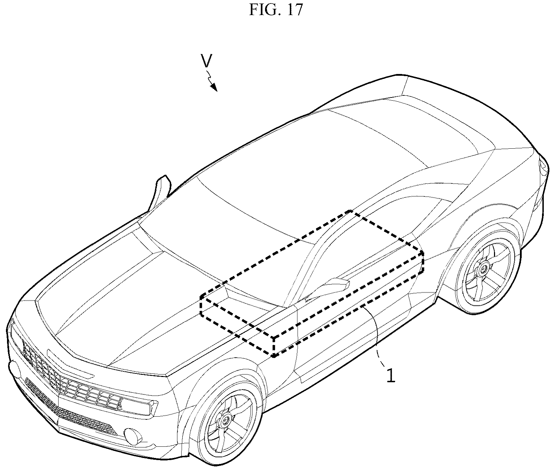

FIG. 17 is a schematic perspective view of a vehicle including a battery pack according to an embodiment of the present disclosure.

Referring to FIG. 17, a vehicle V according to an embodiment of the present disclosure may include one or more battery packs 1 according to an embodiment of the present disclosure. The vehicle V according to the present disclosure may be, for example, an electric vehicle, a hybrid vehicle, or a plug-in hybrid vehicle. The vehicle V may include a four-wheel vehicle and a two-wheel vehicle. The vehicle V may operate by power supplied from a battery pack 1 according to an embodiment of the present disclosure.

As described above, although the present disclosure has been described with reference to limited embodiments and drawings, the present disclosure is not limited thereto, and various modifications and variations are possible without departing from the technical idea of the present disclosure and the scope of equivalence of the claims to be described below by those skilled in the art to which the present disclosure pertains.

## Claims

1. A battery pack comprising:
a plurality of battery cells; and
a pack case configured to store the plurality of battery cells, and having a first venting channel and a second venting channel formed on both sides of the plurality of battery cells to allow venting gas generated from the battery cell to flow thereinto.

2. The battery pack according to claim 1,
wherein the first venting channel is provided at a bottom of the plurality of battery cells, and
wherein the second venting channel is provided at a top of the plurality of battery cells.

3. The battery pack according to claim 1,
wherein the multiple first venting channels and the multiple second venting channels form a group, respectively, and
wherein a plurality of groups of the first venting channels and a plurality of groups of the second venting channels are provided.

4. The battery pack according to claim 1,
wherein the first venting channel and the second venting channel are respectively provided for each group of at least some of the plurality of battery cells.

5. The battery pack according to claim 1,
wherein the first venting channel and the second venting channel are configured in a form that is recessed inward from an inner surface of the pack case.

6. The battery pack according to claim 1,
wherein the first venting channel and the second venting channel are configured to extend along a longitudinal direction of the battery cell, respectively.

7. The battery pack according to claim 1,
wherein a plurality of first venting channels and a plurality of second venting channels are provided to be arranged along a stacking direction of the battery cells, respectively.

8. The battery pack according to claim 1,
wherein the pack case has
a third venting channel configured as a hollow space therein, connected to the first venting channel and the second venting channel, and configured to communicate with an outside of the pack case.

9. The battery pack according to claim 8,
wherein the pack case comprises
a base frame configured to have the plurality of battery cells seated thereon and having the first venting channel formed in an inner space,
a cover frame configured to cover a top of the plurality of battery cells and having the second venting channel formed in an inner space, and
a side frame extending upward from edges of the base frame and having the third venting channel formed in an inner space.

10. The battery pack according to claim 8,
wherein the pack case comprises
a venting device communicating with the third venting channel and configured to discharge venting gas in the third venting channel to the outside.

11. The battery pack according to claim 8,
wherein the pack case comprises
a cross-beam configured to group the plurality of battery cells and having a fourth venting channel formed in an inner space so as to communicate with the first venting channel, the second venting channel, and the third venting channel.

12. The battery pack according to claim 1,
wherein the pack case has a cooling channel formed on both sides of the plurality of battery cells and configured to allow a cooling medium to flow therethrough.

13. The battery pack according to claim 12,
wherein the cooling channel comprises
a first cooling channel located below the first venting channel, and
a second cooling channel located above the second venting channel.

14. The battery pack according to claim 12,
further comprising a cooling plate in which the first venting channel, the second venting channel, and the cooling channel are formed.

15. The battery pack according to claim 1,
further comprising a cooling fin provided between some of the plurality of battery cells.

16. The battery pack according to claim 15,
wherein the cooling fin is configured such that its end is inserted into a side surface of the pack case where at least one of the first venting channel and the second venting channel is formed.

17. The battery pack according to claim 1,
further comprising a plurality of module cases configured such that the plurality of battery cells are stored therein and such that a top surface and a bottom surface are at least partially open.

18. A vehicle comprising a battery pack according to any one of claims 1 to 17.
